# EUROPEAN PATENT APPLICATION

(11) **EP 4 325 826 A1**
(43) Date of publication of application: **21.02.2024**
(21) Application number: 22788436.8
(22) Date of filing: 13.04.2022
(51) Int. Cl.: H04M 1/72415, H04M 1/72469, G06K 7/10, G06K 7/14

(54) **METHOD AND SYSTEM FOR OBTAINING DEVICE INTERNAL INFORMATION IN ELECTRONIC DEVICES**

(30) Priority: 14.04.2021 KR 20210048461; 06.01.2022 KR 20220001895
(71) Applicant: Mintit Co., Ltd., Gyeonggi-do 10117 (KR)
(72) Inventor: JI, Chang Hwan, Seoul 06262 (KR); YOO, Kwang Yeol, Seoul 01784 (KR); YOO, Cheol Jong, Seoul 06991 (KR)
(74) Representative: Gill Jennings & Every LLP
(86) International application number: PCT/KR2022/005349
(87) International publication number: WO 2022/220580

(57) **Abstract**

Disclosed are a system and method for obtaining device internal information in electronic devices. The system for obtaining device internal information, according to an embodiment of the present invention, may comprise the steps of: receiving a selection for 'user action before input' from a user through a UI screen of an automated device; recognizing a product information ID screen displayed on a display of a mobile device put into an input space of the automated device when 'screen-on state input' is selected as the 'user action before input'; and reading a unique ID of the mobile device from the recognized product information ID screen.

## Description

### Technical Field

The invention relates to a method and device for obtaining internal information in electronic devices to solve a problem that occurs when linking with a mobile device based on a new feature and a change in a security policy of the mobile device.

### Background Art

In conventional mobile devices, for example, a manufacturer provides an application programming interface (API) for developers for accessing and integrating various pieces of information in a mobile device for development convenience of mobile device application (app) and web software (SW) developers.

Recently, to reinforce personal information security of a mobile device, a feature may be limited to prevent from obtaining predetermined information in a device or a partial limitation may be imposed to obtain predetermined information in a device when a mechanical connection port for connecting to the mobile device is removed.

For maintenance of a mobile device, a status of the mobile device may need to be examined. In addition, when selling a mobile device, a unique identifier (ID) (a manufacturing number, a product unique number, for example, a serial number or international mobile equipment identity (IMEI) may need to be identified to determine the status history of the mobile device or whether the mobile device is stolen.

In a method of examining and identifying a status of a device, a user may identify with their eyes by manually manipulating (touching) and accessing a screen containing a unique ID on a display of a mobile device or using an app and a web SW (world-wide web SW) for reading the unique ID by linking to the mobile device. The app may be an application software installed and executed in a mobile device and the web SW may be SW wirelessly linking to a mobile device through a communication network (by wire, wireless, and the like), such as the Internet.

When directly identifying a unique ID, a user may manually manipulate a mobile device and identify with their eyes.

When reading a unique ID by linking to the mobile device, a predetermined device and an app or web SW may be used and this may be widely used by an automated device replacing human workforce (labor).

However, when a feature for reading a unique ID by linking to a mobile device is limited or an interface for forcibly reading a unique ID is not available, a problem in reading a unique ID may occur. For example, in the case of a mobile phone that is one of mobile devices, whether the mobile phone is stolen or not may be determined by identifying and comparing a predetermined ID for checking theft information among unique IDs.

Generally, device internal information may be identified only when accessing a screen containing a unique ID as a user sequentially enters steps determined by a user interface (UI).

Accordingly, to determine device internal information, there is a demand for an improved model for excluding passive manipulation of a user and easily identifying device internal information by minimizing a user action in an automated device.

### Disclosure of the Invention

### Technical Goals

An example embodiment of the present invention provides a method and system for obtaining device internal information in electronic devices by analyzing a screen of a mobile device inserted into an automated device and extracting a unique identifier (ID) of the mobile device.

In addition, an example embodiment of the present invention is provided to access a product information ID screen including a unique ID by controlling a screen of a mobile device inserted into an automated device.

In addition, an example embodiment of the present invention is provided to optimally control a screen of a mobile device by an automated device by automatically correcting a pose of the mobile device inserted into the automated device.

In addition, an example embodiment of the present invention is provided to accurately control a screen of a mobile device by utilizing spatial touch by a spatial touch hand.

### Technical Solutions

According to an example embodiment of the present invention, a method of obtaining device internal information in electronic devices includes receiving selection of a user related to a "user operation before insertion" through a user interface (UI) screen of an automated device, in response to selection of "Insert while screen is turned on" as the "user operation before insertion", recognizing a product information identifier (ID) screen displayed on a display of a mobile device inserted into an insertion space of the automated device, and reading a unique ID of the mobile device from the recognized product information ID screen.

In addition, according to an example embodiment of the present invention, a system for obtaining device internal information in electronic devices includes a selection unit configured to receive selection of a user related to a "user operation before insertion" through a UI screen of an automated device, and a recognition unit configured to, in response to selection of "Insert while screen is turned on" as the "user operation before insertion", recognize a product information ID screen displayed on a display of a mobile device inserted into an insertion space of the automated device and read a unique ID of the mobile device from the recognized product information ID screen.

### Effects

According to an example embodiment, a method and system for obtaining device internal information in electronic devices by analyzing a screen of a mobile device inserted into an automated device and extracting a unique identifier (ID) of the mobile device are provided.

In addition, according to the present invention, a produce information ID screen including a unique ID is accessed by controlling a screen of a mobile device inserted into an automated device.

In addition, according to the present invention, a screen of a mobile device is optimally controlled by an automated device by automatically correcting a pose of the mobile device inserted into the automated device.

In addition, according to the present invention, a screen of a mobile device is accurately controlled by utilizing spatial touch by a spatial touch hand.

### Brief Description of Drawings

FIG. 1 is a block diagram illustrating a configuration of a system for obtaining internal information of electronic devices according to one example embodiment.
FIG. 2 is a diagram illustrating an example of a unique identifier (ID) of a mobile device.
FIGS. 3A to 3C are diagrams illustrating an example of obtaining a unique ID of a mobile device.
FIG. 4 is a diagram illustrating an example of displaying a product information ID screen on a display of a mobile device.
FIGS. 5A to 5C are diagrams illustrating an example of manipulating a mobile device using coordinate recognition and spatial touch according to the present invention.
FIG. 6 is a diagram illustrating an example of touching a space, according to the present invention.
FIG. 7 is a diagram generally illustrating a method of obtaining an internal unique ID of a mobile device according to the present invention.
FIG. 8 is a diagram illustrating an example of obtaining an internal unique ID of a mobile device by installing an app after inserting the mobile device.
FIG. 9 is a flowchart illustrating a method of obtaining internal information of electronic devices according to one example embodiment.

### Best Mode for Carrying Out the Invention

Hereinafter, example embodiments will be described in detail with reference to the accompanying drawings. However, various alterations and modifications may be made to the embodiments. Here, the embodiments are not meant to be limited by the descriptions of the present disclosure. The embodiments should be understood to include all changes, equivalents, and replacements within the idea and the technical scope of the disclosure.

The terminology used herein is for the purpose of describing particular example embodiments only and is not to be limiting of the example embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. In the description of embodiments, detailed description of well-known related structures or functions will be omitted when it is deemed that such description will cause ambiguous interpretation of the present disclosure.

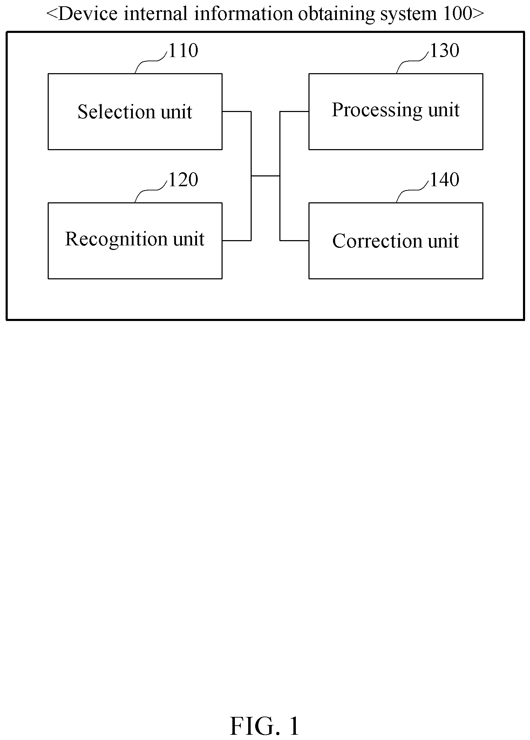

FIG. 1 is a block diagram illustrating a configuration of a system for obtaining internal information of electronic devices according to one example embodiment.

Referring to FIG. 1, the system for obtaining internal information of electronic devices 100 (hereinafter, referred to as a "device internal information obtaining system") may include a selection unit 110 and a recognition unit 120. In addition, according to an example embodiment, the device internal information obtaining system 100 may be configured by selectively adding a processing unit 130 and a correction unit 140.

Firstly, the selection unit 110 may receive a selection related to "a user operation before insertion" from a user through a user interface (UI) screen of an automated device. That is, the selection unit 110 may allow a user approaching the automated device to select a state of a mobile terminal and whether to insert into the automated device through the UI screen.

The "user operation before insertion" provided on the UI screen may be "insert while screen is turned on", "insert after installing app", "install app after insertion", and "insert after unlocking password", and among them, the selection unit 110 may receive one clicked by the user as "the user operation before insertion" of the user's selection.

"Insert while screen is turned on" may be a user operation to insert a mobile device into the automated device while a product information identifier (ID) screen including a unique ID is displayed on a display.

In the present invention, installation of an app in the mobile device may be selectively performed before or after inserting the mobile device into the automated device.

"Insert after installing app" may be a user operation to insert a mobile device into an automated device in a state in which an app is installed such that the automated device is able to control the mobile device. According to an example embodiment, "Insert after installing app" may be a user operation that directly displays a product information ID screen on a display with a single click by the app and inserts the mobile device in a state in which the product information ID screen is displayed into the automated device.

"Install app after insertion" may be a user operation to automatically install an app on an inserted mobile device as the mobile device is inserted into the automated device. According to an example embodiment, "Install app after insertion" may be a user operation to install an app in a mobile device inserted into an automated device and display a product information ID screen on a display by the app.

"Insert after unlocking password" may be a user operation to insert a mobile device into an automated device while only a locked state is unlocked.

The recognition unit 120 may recognize a product information ID screen displayed on a display of a mobile device inserted into an insertion space of the automated device as "Insert while screen is turned on" is selected to be the "user operation before insertion". That is, the recognition unit 120 may determine a product information ID screen displayed on a display of a mobile device by a user who selects "Insert while screen is turned on".

Under the selection of "Insert while screen is turned on", the user may access the product information ID screen by manually manipulating (manually clicking a menu) the mobile device and causing the display to display the product information ID screen.

The product information ID screen may be a device status screen displaying a unique ID of a mobile device and, for example, may display internal ID information related to a device including international mobile equipment identity (IMEI) information of the mobile device.

Thereafter, the recognition unit 120 may read the unique ID of the mobile device from the recognized product information ID screen. That is, the recognition unit 120 may read a combination of characters, numbers, and special characters corresponding to the unique ID by scanning the product information ID screen.

Through this, the device internal information obtaining system 100 may extract a unique ID of a mobile device by analyzing a screen of the mobile device inserted into an automated device.

In another example embodiment, when a user selects "Insert after installing app" as the "user operation before insertion", the device internal information obtaining system 100 may access the product information ID screen by remotely controlling the mobile device through the installed app.

For this, the device internal information obtaining system 100 may further include the processing unit 130.

That is, as "Insert after installing app" is selected as the "user operation before insertion", the processing unit 130 may execute the installed app in a mobile device that is inserted into an insertion space of an automated device and may display a product information ID screen on a display of the mobile device.

In another example embodiment, when a user selects "Install app after insertion" as the "user operation before insertion", as the device internal information obtaining system 100 recognizes that a mobile device is inserted into an automated device, the device internal information obtaining system 100 may automatically install an app in the inserted mobile device. Through this, the device internal information obtaining system 100 may access the product information ID screen by remotely controlling the mobile device through the installed app.

For this, as "Install app after insertion" is selected as the "user operation before insertion", the processing unit 130 may automatically install an app in a mobile device that is inserted into an insertion space of the automated device.

In addition, the processing unit 130 may display the product information ID screen on a display of the mobile device by executing the installed app.

In this case, the app may be a dedicated application for implementing remote control of the mobile device.

To install the app, for example, a guide may be provided to a nearby user by the automated device and a user may manually download and install the app in the mobile device based on the guide. For example, for a mobile device inserted into the automated device, the app may be automatically downloaded and installed.

Under the selection of "Insert after installing app" or "Install app after insertion", the product information ID screen may be accessed as the automated device remotely controls and manipulates (automatically clicks a menu) the mobile device through the app and causes a display to display the product information ID screen.

Thereafter, the recognition unit 120 may recognize the product information ID screen displayed on the display of the mobile device and may read a unique ID of the mobile device from the recognized product information ID screen. That is, the recognition unit 120 may read a combination of characters, numbers, and special characters corresponding to the unique ID by scanning the product information ID screen displayed through remote control by the app.

Through this, the device internal information obtaining system 100 may control a screen of a mobile device inserted into the automated device, may access a product information ID screen including a unique ID, may analyze the accessed product information ID screen, and may extract the unique ID of the mobile device.

According to an example embodiment, the device internal information obtaining system 100 may store, as an image, the product information ID screen displayed through remote control by the app and may read the unique ID from the stored image.

For this, the processing unit 130 may save the product information ID screen displayed on the display of the mobile device and may generate the screen save data. That is, the processing unit 130 may provide an environment for analyzing screen save data that is a relatively small-sized image rather than analyzing the product information ID screen described above.

Thereafter, the recognition unit 120 may extract the unique ID of the mobile device from the screen save data.

Through this, because the device internal information obtaining system 100 may extract an unique ID from the screen save data that saves a screen of the product information ID screen, the device internal information obtaining system 100 may secure internal information of the mobile device using a relatively small volume of processing resources.

In another example embodiment, when a user selects "Insert after unlocking password" as the "user operation before insertion", the device internal information obtaining system 100 may access the product information ID screen by performing touch manipulation on the mobile device.

For this, the device internal information obtaining system 100 may further include the correction unit 140.

That is, as "Insert after unlocking password" is selected as the "user operation before insertion", the correction unit 140 may correct a pose of a mobile device inserted into an insertion space of the automated device. That is, the correction unit 140 may correct the mobile device, which is unlocked and inserted into an insertion space provided in the automated device, to be in a regular pose to enable spatial touch.

In pose correction, the correction unit 140 may correct a pose such that the mobile device is able to maintain balance in the insertion space without being tilted.

For this, the correction unit 140 may correct the tilt by moving at least one side surface of the mobile device in a direction that is the same as one side surface of the insertion space and may correct a position by matching the center of the mobile device after tilt correction with central coordinates of a coordinate system set to the insertion space.

For example, when the insertion space has a box shape of which the bottom surface is a rectangle, the correction unit 140 may perform tilt correction and position correction on the mobile device to be disposed in the same direction and the same angle as the bottom surface of the insertion space.

For position identification and pose correction operations on a mobile device inserted into the insertion space, a camera capturing the mobile device and an image captured by the camera may be used.

The processing unit 130 may display the product information ID screen on the display of the mobile device by spatial touch manipulation of the mobile device after the pose correction.

In this case, spatial touch may refer to manipulation that automatically touches a display of a mobile device corrected and disposed in a defined pose in an insertion space while excluding a passive touch by a user.

Through correction, a touch area may be set to be a rectangle having a size available to include the mobile device therein such that the mobile device is disposed in the same angle and direction as the bottom surface of the insertion space.

The processing unit 130 may set a grid-type coordinate system based on optical flow between a "light source" and "reception" disposed at a determined interval in the touch area.

In addition, the processing unit 130 may calculate XY coordinates in the coordinate system by recognizing a change in the optical flow and may manipulate spatial touch on the calculated XY coordinates by a spatial touch hand moving along an x-side driving rail and a y-side driving rail.

That is, the processing unit 130 may calculate coordinates in which light emitted from the "light source" flows to different "reception" rather than estimated "reception" or the optical flow temporarily pauses to be XY coordinates in which the optical flow is changed and may move the spatial touch hand to the calculated XY coordinates.

The spatial touch hand may move to the XY coordinates through the x-side driving rail and the y-side driving rail, and the processing unit 130 may manipulate the spatial touch by touching the display of the mobile device by the spatial touch hand moved to the XY coordinates.

The XY coordinates may be position values for each step to switch a sub-menu that is predetermined by each mobile device.

Under the selection of "Insert after unlocking password", the product information ID screen may be accessed by causing the display of the mobile device to display the product information ID screen through spatial touch by the spatial touch hand.

Thereafter, the recognition unit 120 may recognize the product information ID screen displayed on the display of the mobile device and may read a unique ID of the mobile device from the recognized product information ID screen. That is, the recognition unit 120 may read a combination of characters, numbers, and special characters corresponding to the unique ID by scanning the product information ID screen displayed through spatial touch.

Through this, the device internal information obtaining system 100 may allow the automated device to optimally control the screen of the mobile device by automatically correcting the pose of the mobile device inserted into the automated device.

In addition, the device internal information system 100 may accurately control the screen of the mobile device by selectively using spatial touch by the spatial touch hand.

The device internal information obtaining system 100 of the present invention may obtain internal information of a mobile device by dividing cases into a case in which there are many user activities and a case in which there are few user activities.

When there are many user activities, the device internal information obtaining system 100 may simplify a function to be performed by the automated device.

On the other hand, when there are few user activities, the device internal information obtaining system 100 may require various devices and control techniques for processing many functions as an increase in functions of the automated device.

The device internal information obtaining system 100 may use a method of integrating a user manipulation with an image device as a method of obtaining a unique ID.

The method of integrating user manipulation with an image device may be a method of i) manually touching (pressing) a UI screen (a product information ID screen) in which a unique ID that is internal information is displayed on a UI of a mobile device and ii) after inserting the mobile device in a state in which the product information ID screen is displayed into an automated device, reading a unique ID as the automated device recognizes the product information ID screen.

When a mobile device is inserted into the automated device, the device internal information obtaining system 100 may recognize a product information ID screen displayed on a display of the mobile device with the automated device and may automatically read a unique ID of the mobile device from the recognized product information ID screen.

The device internal information obtaining system 100 may include a recognition algorithm obtaining internal information (a unique ID) of the mobile device by reading graphics (barcode and quick response (QR) code) and text (a character and a number) displayed on the product information ID screen.

A recognition method of a product information ID screen may be a scanning method and a capturing method using an image device and depending on the recognition method, text recognition and reading processes may differ.

The scanning method may adjust a position and an interval between a screen of a mobile device and an image device.

The capturing method may be implemented by carefully paying attention to a view angle (a view area) and screen distortion due to a lens and a distance.

Specifically, whether to apply an additional lighting device may be determined based on the type and installation position of the image device and a lighting device may be appropriately applied based on the recognition method and a configuration.

The device internal information obtaining system 100 may recognize a product information ID screen with at least one still screen.

The device internal information obtaining system 100 may include a software algorithm for identifying a character and a number in the recognized product information ID screen and converting the identified character or number into a character or a number that may be read by the automated device.

When the product information ID screen includes a barcode or QR code, the device internal information obtaining system 100 may read and process a unique ID of the mobile device through a dedicated reader algorithm (software (SW)).

When the product information ID screen only includes a character string, the device internal information obtaining system 100 may crop (cut) a screen of a required area in the character string and may read and process a unique ID of the mobile device by applying a comparison and conversion algorithm (e.g., an optical character reader (OCR)).

Although there are many methods of finding a character string, because information provided by a product information ID screen is similar depending on a manufacturer, the device internal information obtaining system 100 may easily find a required character string through basic training related to a menu image.

The device internal information obtaining system 100 may additionally include an analysis method of a predetermined font because a character may be displayed in various fonts depending on character settings of a customer's mobile phone.

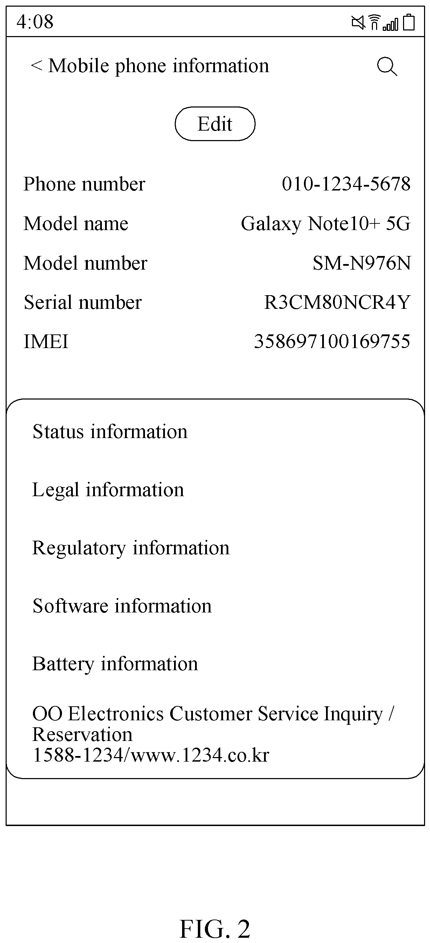

FIG. 2 is a diagram illustrating an example of a unique identifier (ID) of a mobile device.

When a product information ID screen as shown in FIG. 2 is displayed on a display of a mobile device by a user's UI manipulation, the device internal information obtaining system 100 may recognize the product information ID screen through an automated device. In the automated device, a character string corresponding to IMEI may be found in the product information ID screen by an analysis algorithm (SW) and a unique ID constituted by an actual text character and a number may be read from the character string.

That is, the device internal information obtaining system 100 may read IMEI "358697100169755" as a unique ID of the mobile device.

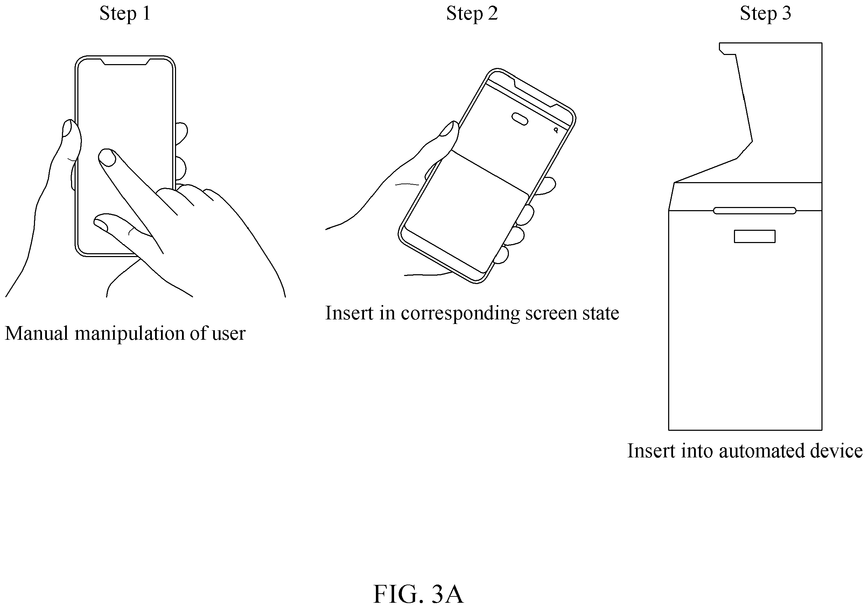

FIGS. 3A to 3C are diagrams illustrating an example of obtaining a unique ID of a mobile device.

FIG. 3A illustrates an example that a user manipulates a mobile device to display a product information ID screen and then insert the mobile device into an automated device.

In step 1 of FIG. 3A, illustrated is that a user (shown as the USER) manually manipulates a mobile device.

In step 2 and step 3 of FIG. 3A, illustrated are examples that the mobile device is inserted into the automated device while the product information ID screen is displayed on a display of the mobile device based on user manipulation.

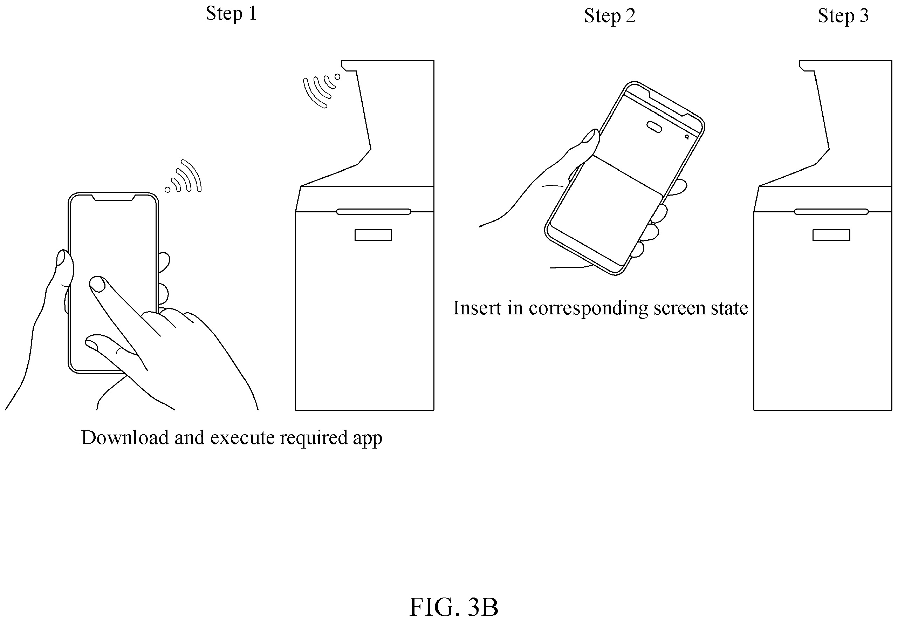

FIG. 3B is a diagram illustrating an example that a user downloads a required application (also referred to as an app) to a mobile device, executes the application, and inserts the mobile device into the automated device.

In step 1 of FIG. 3B, illustrated is an example that as a mobile device approaches and is wirelessly connected to an automated device, a required application is downloaded and executed in the mobile device.

In step 2 of FIG. 3B, illustrated is an example that a product information ID screen is displayed on a display of the mobile device using the required application with a single click and the mobile device is inserted into the automated device while the product information ID screen is displayed.

According to an example embodiment, the device internal information obtaining system 100 may display the product information ID screen on the display of the mobile device by remotely controlling the mobile device using the required application.

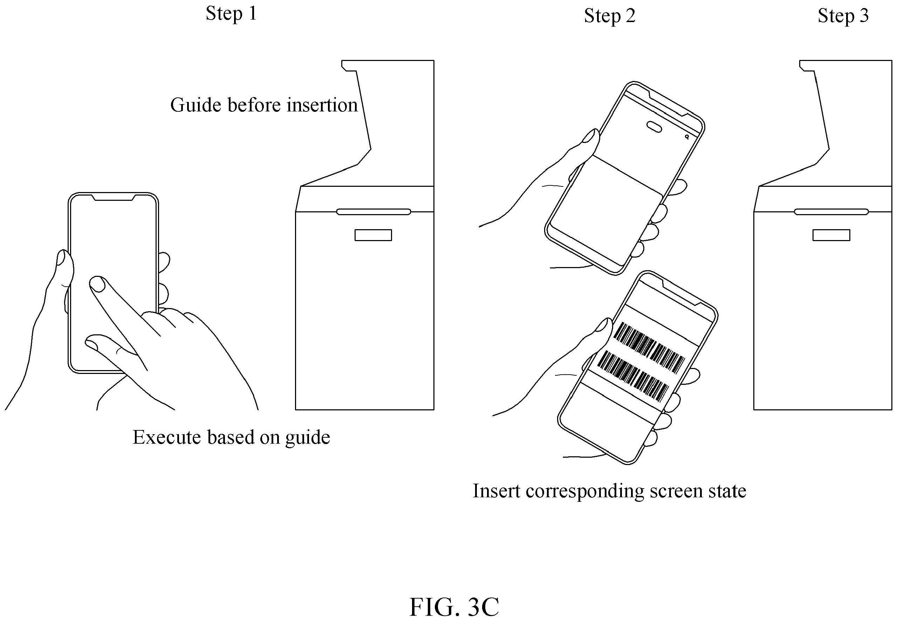

FIG. 3C is a diagram illustrating an example that when a user approaches an automated device, a user manipulates to display a product information ID screen based on a guide provided by the automated device and then inserts a mobile device into the automated device.

In step 1 of FIG. 3C, illustrated is that a user manipulates a mobile device to display a product information ID screen based on a before insertion guide provided by the automated device. In this case, the before insertion guide may be a voice guide directly provided to the user and text or a graphic guide provided through a screen of the automated device.

In step 2 of FIG. 3C, illustrated is an example that a mobile device is inserted into an automated device while a product information ID screen is displayed on a display of the mobile device. In an example embodiment, leakage of a product information ID screen may be prevented because the product information ID screen may be converted into a barcode type and inserted into the automated device.

A method of displaying a product information ID screen on a display of a mobile device may be a method of using a hidden feature provided by a mobile device manufacturer and a method of using an app.

The method of using a hidden feature provided by a mobile device manufacturer may be performed when a user, who identifies information of each model of a mobile device, recognizes how to use a hidden feature and executes corresponding code in a call mode.

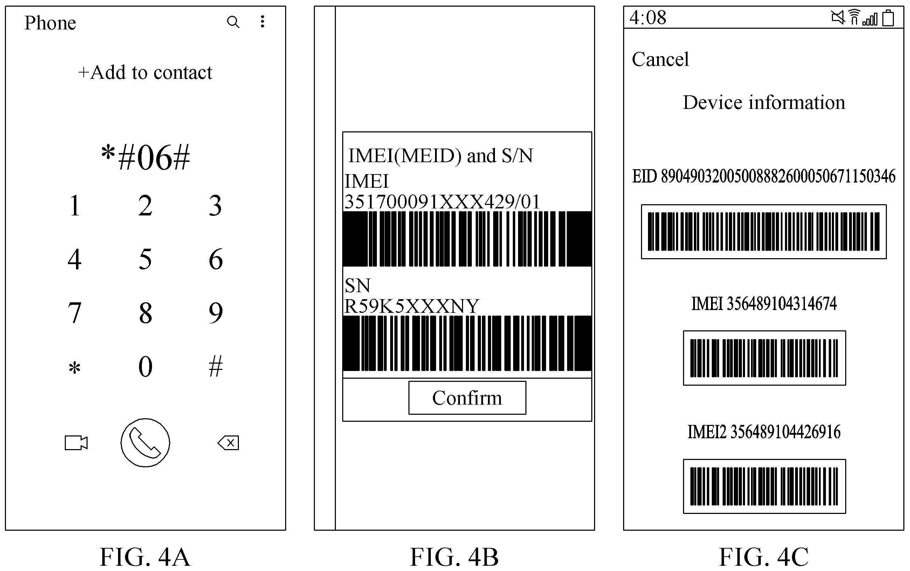

FIG. 4 is a diagram illustrating an example of displaying a product information ID screen on a display of a mobile device.

FIG. 4A illustrates an example that a user enters pre-recognized code "*#06#" in a call mode of a mobile device to execute a product information ID screen.

The code "*#06#" may be, for example, code that is pre-recognized by the user or may be provided to the user by an automated device as the automated device identifies a model of the model device.

FIGS. 4B and 4C are examples of screens for executing a product information ID screen as the code "*#06#" is entered.

FIG. 4B is an example of a screen in which a product information ID screen related to IMEI and a serial number (S/N) is converted into a barcode and displayed.

FIG. 4B is an example of a screen in which a product information ID screen related to device information is converted into a barcode and displayed.

Code for executing the product information ID screen may vary depending on a manufacturer model of a mobile device.

By pre-recognizing code to be entered, a user may rapidly execute the product information ID screen and may obtain a unique ID of a desired mobile device.

In addition, depending on a manufacturer, IME2 information may be additionally provided with the product information ID screen.

In FIG. 4C, IMEI may be a unique ID of a mobile device, IMEI2 may be an ID assigned by a mobile carrier, and the device internal information obtaining system 100 may read the unique ID according to the accurate purpose.

As the barcode shown in FIG. 4B or FIG. 4C is recognized by the automated device, the device internal information obtaining system 100 may read a unique ID by analyzing the barcode and identifying a corresponding number sequence or may read the unique ID by identifying a character corresponding to the IMEI among characters specified in the barcode.

The device internal information obtaining system 100 may include a multi-barcode recognition and processing technique to read a plurality of barcodes.

In addition, the device internal information obtaining system 100 may cause the automated device to guide a user (e.g., voice guide to the user by the automated device or text or graphic guide provided through a screen of the automated device) when the user approaches the automated device and based on the guide, may cause a dedicated application to be downloaded to the mobile device of the user.

When the dedicated application is executed in the mobile device, the device internal information obtaining system 100 may cause the product information ID screen to be displayed on a display of the mobile device through a user's touch (one or two touches).

Through this, the device internal information obtaining system 100 may allow the user to avoid complicated scrolling and menu searching.

According to an example embodiment, as the mobile device is inserted into the automated device, the device internal information obtaining system 100 may display the product information ID screen by an automation technique of the automated device and may recognize the product information ID screen.

In this case, before the user inserts the mobile device into the automated device, the device internal information obtaining system 100 may guide the user in advance to insert the mobile device while a password or an authentication feature is removed from the mobile device.

As the mobile device enters an inlet of the automated device or is disposed on a predetermined position of the automated device, the device internal information obtaining system 100 may obtain a unique ID of the mobile device.

In this case, the automated device may manipulate the mobile device to display a product information ID screen on the display of the mobile device.

The product information ID screen may be divided into a screen showing a unique ID of the mobile device and a screen showing the unique ID in the form of a barcode.

The device internal information obtaining system 100 may manipulate the mobile device inserted into the automated device to turn on power of the mobile device or turn on (a basic operation mode) the screen in a black state (e.g., a state in which the screen is turned off such as a power save mode).

The device internal information obtaining system 100 may display the product information ID screen on the display of the mobile device through the automated device by turning on the power or remotely controlling the mobile device in the basic operation mode.

Alternatively, the device internal information obtaining system 100 may display the product information ID screen on the display of the mobile device through the automated device by turning on the power or manipulating spatial touch on the mobile device in the basic operation mode.

In this case, the device internal information obtaining system 100 may stably fix the mobile device to prevent the mobile device from moving because the size, volume, and shape of the mobile device vary and the mobile device is disposed and not fixed to a predetermined space.

After fixing the mobile device, the device internal information obtaining system 100 may match central coordinates of the predetermined space of the automated device with central coordinates of the mobile device.

To match the coordinates of the mobile device, the device internal information obtaining system 100 may need to fix at least two surfaces of the mobile device and may set one or more directions to be a control direction for fixing.

That is, the device internal information obtaining system 100 may include moving and fixing axes in the automated device, may move the mobile device to a central portion, and may fix the mobile device when the mobile device is disposed on the center.

In addition, the device internal information obtaining system 100 may touch the display of the mobile device using a structure for fixing the bottom surface of the mobile device disposed on the center.

When the mobile device is fixed to the central coordinates, the device internal information obtaining system 100 may recognize an accurate position of the mobile device fixed to the predetermined space and configurations and positions of UI menu screens in the mobile device.

To sequentially display the product information ID screen as the automated device directly touches the mobile device, a coordinate value of the product information ID screen may need to be recognized.

Because most mobile devices have screens configured in a matrix structure and allowing to move vertically and horizontally, the device internal information obtaining system 100 may perform a touch feature by recognizing position information of the mobile device.

To recognize a coordinate value of X and Y axes, a coordinate value of a corresponding space may need to be set in advance and actual coordinates of the mobile device may be recognized based on a point where the mobile device is disposed.

The device internal information obtaining system 100 may calculate coordinates for each feature of a screen UI of the mobile device based on the recognized coordinates.

The device internal information obtaining system 100 may display the product information ID screen by pressing corresponding menus in order based on the calculated coordinate value.

The device internal information obtaining system 100 may calculate a coordinate value based on the mobile device or based on the bottom surface.

When based on the bottom surface, the device internal information obtaining system 100 may calculate operation coordinates (actual coordinates required for menu operation) by correcting coordinates of the bottom surface where the mobile device is disposed with UI icon coordinates for a model of the mobile device.

In addition, when based on the mobile device, the device internal information obtaining system 100 may set operation coordinates by determining a reference point to coordinate the mobile device.

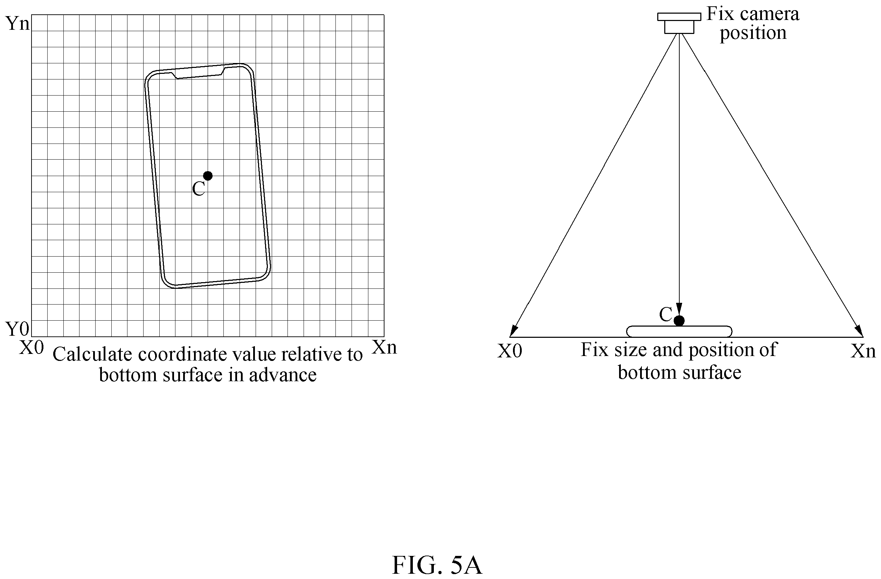

FIGS. 5A to 5C are diagrams illustrating an example of manipulating a mobile device using coordinate recognition and spatial touch according to the present invention.

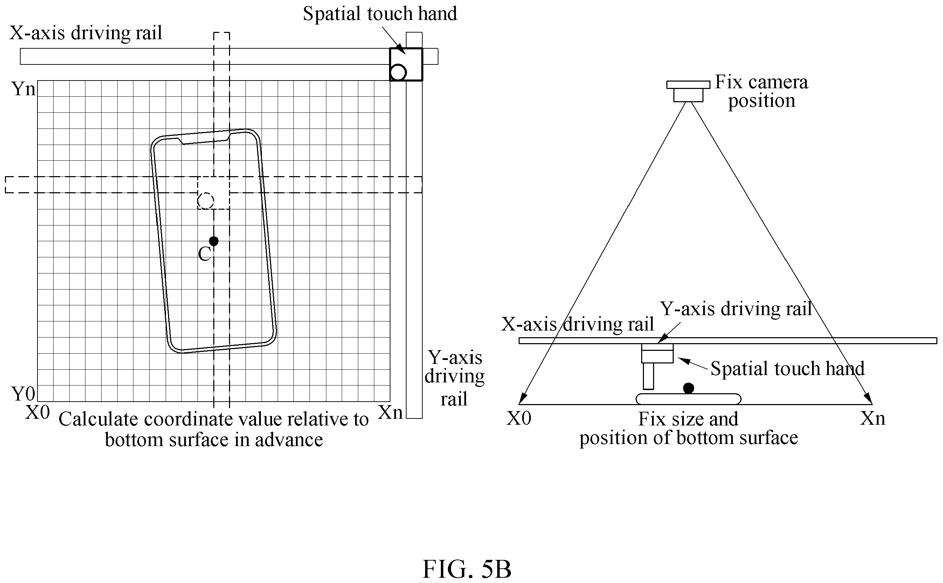

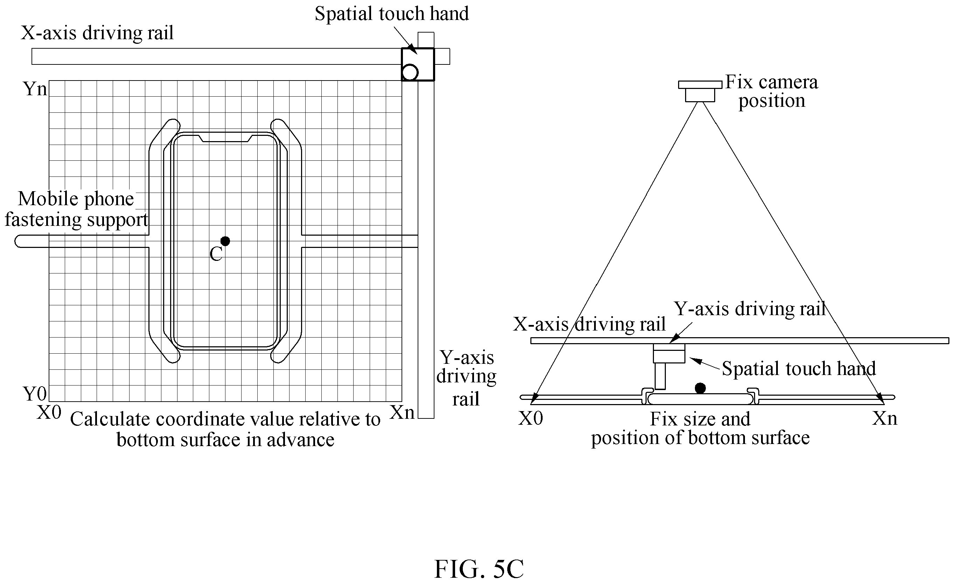

In FIG. 5, the device internal information obtaining system 100 may set, in advance, a coordinate system relative to the bottom surface of a predetermined space in which a mobile device is disposed.

Thereafter, as the mobile device is disposed on the predetermined space, the device internal information obtaining system 100 may calculate a coordinate value (X, Y) occupied by the mobile device based on the set coordinate system.

After determining that a position of the mobile device is fixed, the device internal information obtaining system 100 may identify, through a camera, the size of the bottom surface occupied by the mobile device and a coordinate value of the fixed position of the mobile device in the set coordinate system. That is, the camera may be used to calculate a coordinate value of the bottom surface and recognize a position coordinate value of the mobile device.

In addition, the device internal information obtaining system 100 may also identify the degree of separation between the center c of the set coordinate system and the coordinate value of the mobile device.

In FIG. 5B, the device internal information obtaining system 100 may include a spatial touch hand moving along an x-side driving rail and a y-side driving rail.

In this case, the device internal information obtaining system 100 may calculate position coordinates in a screen in which a menu to be touched is positioned, based on the center c.

In FIG. 5C, the device internal information obtaining system 100 may rotate the mobile device using a fixing support and may match the center of the mobile device with the center c of the bottom surface.

Thereafter, the device internal information obtaining system 100 may spatially touch the mobile device of which central coordinates are fixed by moving the spatial touch hand along the x-side driving rail and the y-side driving rail.

In addition, the device internal information obtaining system 100 may include a light source unit having light emitting and receiving features on X and Y axes as a component of a touch recognition device for an air touch feature.

The light source unit may integrate and control a mobile device with various wired or wireless interfaces (I/Fs), such as universal serial bus (USB), Bluetooth (BT), and Wi-Fi.

The device internal information obtaining system 100 may decrease an influence and an impact to a surface of the mobile device by disposing a light source having a height H and a reception at a lower end and providing an effect of touching the surface of a mobile device using light emitted by the light source.

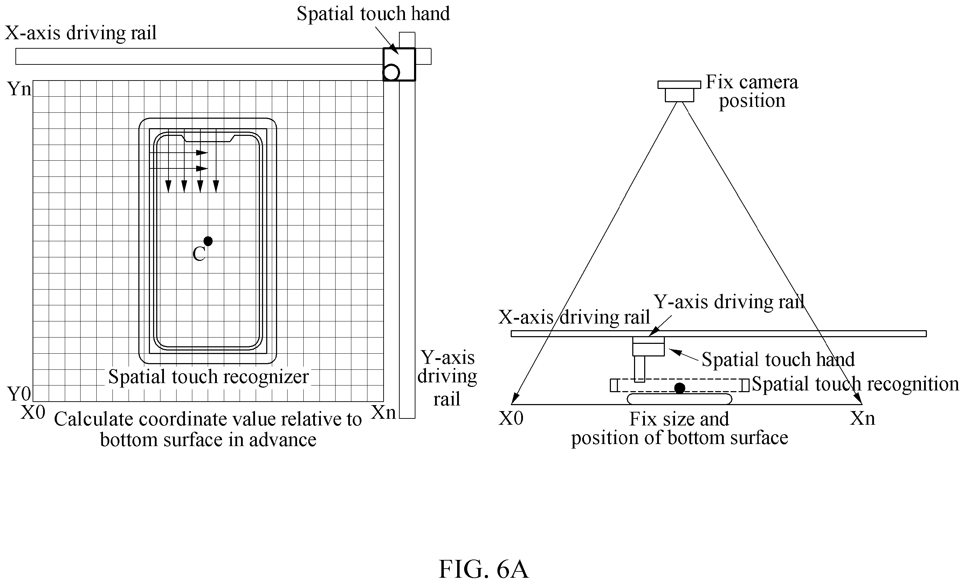

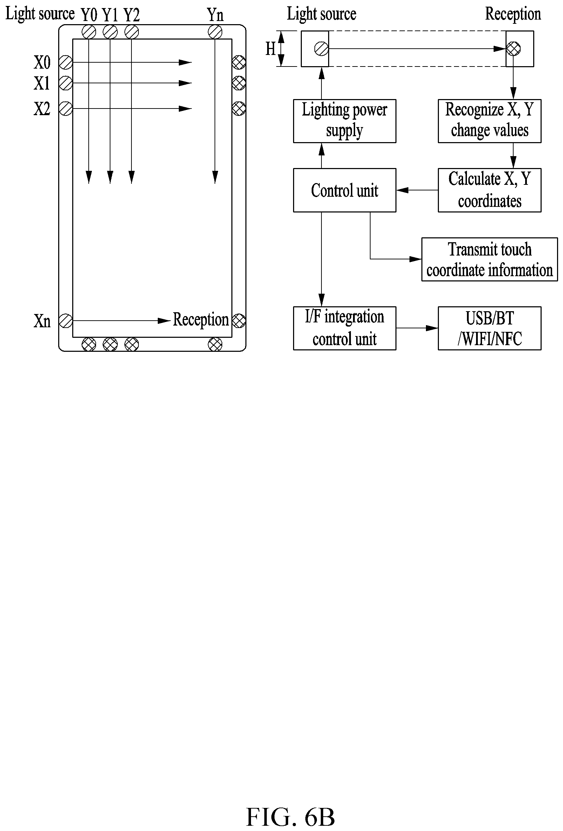

FIG. 6 is a diagram illustrating spatial touch in a space having a predetermined height on an LCD of a mobile device.

FIG. 6 describes an example embodiment for reducing impact damage when touching by touching a predetermined space on an LCD of a mobile device without directly contacting a surface of the LCD.

In FIG. 6A, the device internal information obtaining system 100 may calculate a touch area by a spatial touch recognizer while matching the center c of the bottom surface of an automated device with the center of a mobile device.

The device internal information obtaining system 100 may spatially touch the surface of the mobile device using a spatial touch hand moving on the calculated touch area along an X-axis driving rail and a Y-axis driving rail. The spatial touch hand may be moved in the touch area by the X-axis and Y-axis driving rails.

FIG. 6B may be a functional structure diagram for spatial touch recognition.

In FIG. 6B, the device internal information obtaining system 100 may designate a light source and a reception to the outer side of the touch area and may set a grid-type coordinate system for spatial touch using optical flow between the light source and the reception.

In the light source, light may be emitted by a lighting power supply by a control unit. The control unit may be connected to USB, BT, Wi-Fi, and near field communication (NFC) by wire or wirelessly by an I/F integration control unit.

In the reception, the emitted light may be received.

In the optical flow between the light source and the reception, the control unit may recognize an X and Y change value in response to a change in the optical flow and may calculate an X, Y coordinate value. The calculated X, Y coordinate value may be transmitted to the control unit and the control unit may control the spatial touch hand to spatially touch at the X, Y coordinate value.

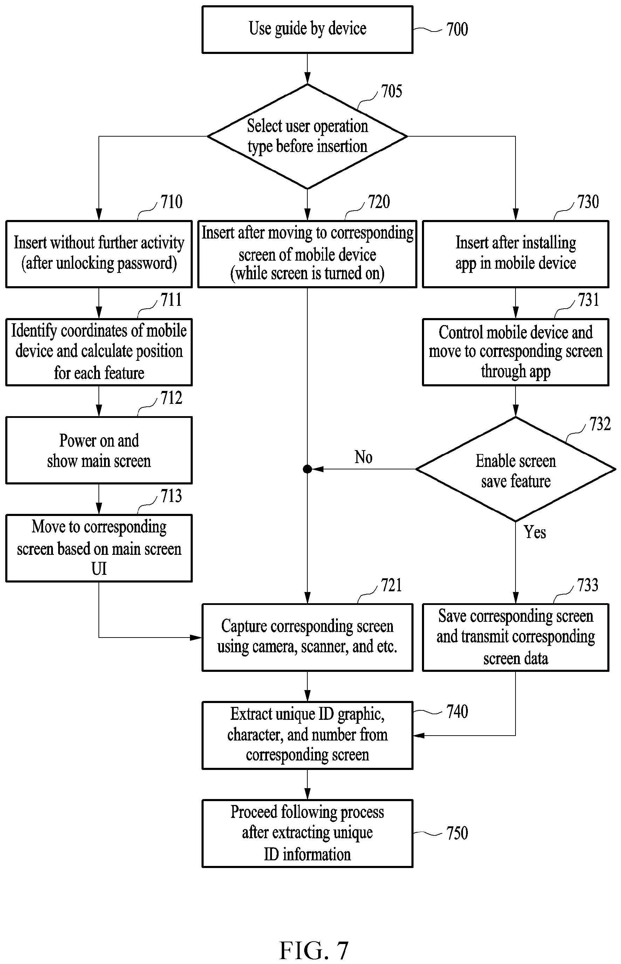

FIG. 7 is a diagram generally illustrating a method of obtaining an internal unique ID of a mobile device according to the present invention.

In operation 700, the device internal information obtaining system 100 may allow a user to receive a use guide from a device (an automated device).

In operation 705, the device internal information obtaining system 100 may receive selection of a user provided with the use guide with respect to a user operation type before inserting a mobile device.

Operations 710 and below are operations when the user selects to insert the mobile device without a further action after unlocking a password.

In operation 711, the device internal information obtaining system 100 may identify coordinates of the mobile device and may calculate a position for each feature.

In operation 712, the device internal information obtaining system 100 may turn on power of the mobile device and display a main screen.

In operation 713, the device internal information obtaining system 100 may move to a corresponding screen (a product information ID screen) based on a main screen UI of the mobile device.

Operations 720 and below are operations when the user selects to insert the mobile device of which the screen is turned on after moving to the corresponding screen (the product information ID screen) of the mobile device.

In operation 721, the device internal information obtaining system 100 may capture the corresponding screen (the product information ID screen) using a camera, a scanner, and the like. Operation 721 may be a process that proceeds after operation 713 described above.

Operations 730 and below are operations when the user selects to insert the mobile device after installing an app on the mobile device.

In operation 731, the device internal information obtaining system 100 may control the mobile device and move to the corresponding screen (the product information ID screen) through the app.

In operation 732, the device internal information obtaining system 100 may determine whether a screen save feature is enabled.

If the screen save feature is not available, the device internal information obtaining system 100 may proceed to operation 721 described above.

On the other hand, if the screen save feature is enabled, in operation 733, the device internal information obtaining system 100 may save the corresponding screen and may transmit data on the corresponding screen.

After operation 721 or operation 733, in operation 740, the device internal information obtaining system 100 may extract a graphic, a character, and a number corresponding to a unique ID from the corresponding screen.

In operation 750, the device internal information obtaining system 100 may proceed with a subsequent process after extracting unique ID information.

According to an example embodiment, the device internal information obtaining system 100 may allow the automated device to remotely control (mirroring) the mobile device.

A conventional method is limited to a method in which a user or an automated device needs to directly touch a screen of a mobile device to move to a corresponding screen or use a pass shift app (an app for directing to a desired corresponding screen).

The device internal information obtaining system 100 may automatically control a mobile device inserted into the automated device through remote control mirroring SW by allowing an external mirroring system to remotely control the mobile device and view the screen of the mobile device in the mirroring system.

In this case, mirroring may refer to a feature of sharing a screen of an automated device as the mobile device controls the automated device or sharing a screen of a mobile device as an automated device remotely controls the mobile device.

By applying the mirroring technique, the device internal information obtaining system 100 may securely obtain an ID of a mobile device inserted into the automated device and conduct various tests without installing a separate hardware device in the automated device.

The device internal information obtaining system 100 may reduce a problem in personal security authentication through the mirroring technique.

The device internal information obtaining system 100 may wirelessly download and execute a remote control mirroring app on the mobile device from the automated device. The user may directly download the remote control mirroring app through a device providing the Internet before directly downloading from the automated device and may execute the remote control mirroring app on the mobile device.

A method of operating a remote control mirroring app may be a method in which a user accesses a product information ID screen through a UI screen of an automated device or a method in which an automated device accesses a product information ID screen through an automatic control SW regardless of a user.

The method in which a user enters a product information ID screen through a UI screen of an automated device may allow the user to access the product information ID screen as the user views the UI screen and displays an actual screen of the mobile device in the size that is easy for the user to operate.

An interface method used for mirroring control may be available through direct connection, however, may control using various wireless communication methods, such as Wi-Fi, BT, and NFC provided by the mobile device.

In the method in which an automated device accesses a product information ID screen through an automatic control SW regardless of a user, a control center may control the automated device through a remote control feature or the automated device may control through a remote control mirroring software technique.

When the automated device controls, the automated device may control only when the automated device acknowledges a menu screen configuration of the mobile device through training.

However, even if the automated device acknowledges a manufacturer or a model of a mobile device in advance, the version of an operating system (OS) of the mobile device may not be identified.

Specifically, a configuration of a screen menu UI may partially vary depending on the OS version.

In this case, a method of passing an intermediate process using a one-pass shift app or a barcode call method may be applicable.

In the present invention, two methods are provided as a method of easily obtaining a unique ID of a product information ID screen by using a remote control technique other than moving to the product information ID screen and capturing a corresponding screen using a remote control mirroring feature.

A method 1 may be a method in which a user or an automated device directly copies and uses, using a method such as dragging a mouse cursor, text (a character and a number) of a unique ID in a product information ID screen of a mobile device that is remotely controlled.

A method 2 may be a method in which a product information ID screen of a mobile device is saved using a screen save feature, the saved screen is transmitted to an automated device, and the automated device recognizes and extracts a character, a number, and barcode corresponding to a unique ID from the saved screen.

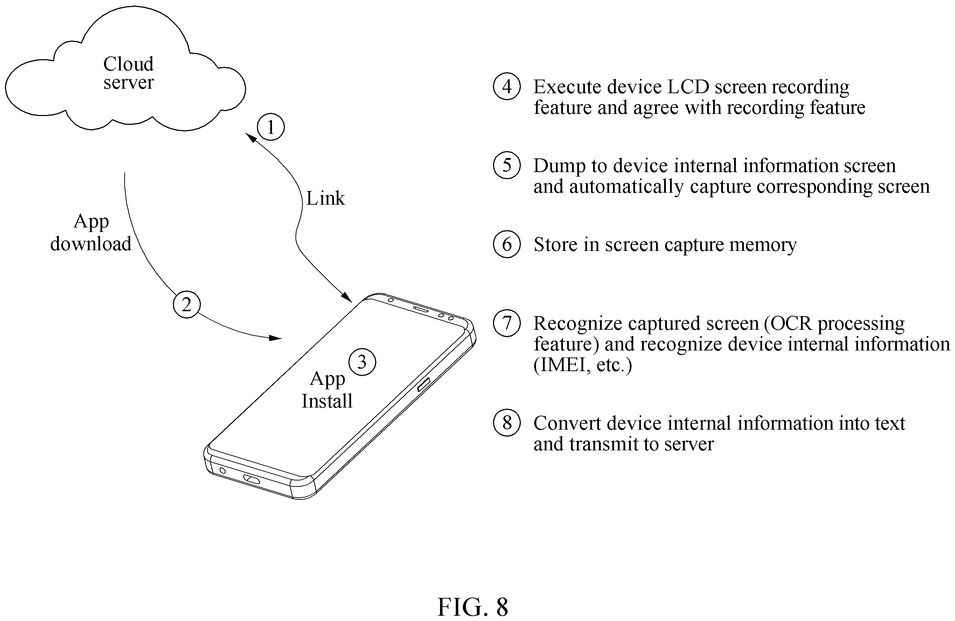

FIG. 8 is a diagram illustrating an example of obtaining an internal unique ID of a mobile device by installing an app after inserting the mobile device.

As a user selects "Install app after insertion" and a mobile device is inserted into an automated device, the device internal information obtaining system 100 may automatically install the app in the inserted mobile device.

The device internal information obtaining system 100 may install an app in a mobile device inserted into the automated device and may display a product information ID screen on a display by the app.

FIG. 8 illustrates an example of controlling a mobile device through an app applied to miniATM.

In ⑤ of FIG. 8, the device internal information system 100 may link a mobile device with a cloud server as the mobile device is inserted into an automated device.

In (2), the device internal information obtaining system 100 may extract an app from the cloud server and may download the app to the mobile device.

In (3), the device internal information obtaining system 100 may install the downloaded app in the mobile device.

In (4), after obtaining a user's consent for executing a device LCD screen recording feature, the device internal information obtaining system 100 may execute a recording feature in the mobile device.

In (5), the device internal information obtaining system 100 may dump to a device internal information screen and may automatically capture the internal information screen.

In ⑥, the device internal information obtaining system 100 may store the captured screen in a memory.

In ⑦, the device internal information obtaining system 100 may recognize device internal information (IMEI and the like) by recognizing the captured screen through an OCR processing feature or the like.

In ⑧, the device internal information obtaining system 100 may convert device internal information into text and may transmit the text to the server.

Typically, to recognize internal information of a used mobile phone, a method of directly linking a predetermined device to data in a predetermined terminal device by connecting the predetermined terminal device to a USB cable and loading information in the predetermined terminal device is used.

A method of physically connecting a terminal device may use a USB cable and a method of connecting through software may be a method in which predetermined information of a terminal device is loaded through application programming interface (API) code that is able to forcibly read the predetermined information in a predetermined environment.

When it is difficult to use predetermined API code or physically connect due to reinforcement of a security policy, the following method may be applied and implemented as a method of conveniently obtaining internal information of a corresponding terminal device.

The method may be a method in which a corresponding terminal device finds and analyzes internal information by itself and provides the internal information as data to be recognized by an external predetermined device and may be an uncontect method in which contect between a customer and a predetermined device is minimized.

To implement this, an app and several features may be required, which are firstly, an app for finding or moving to a screen (an UI depth page) containing internal information of a corresponding terminal device, secondly, a feature for capturing a screen to recognize or analyze information of the screen or cropping and saving a predetermined area of the screen, and thirdly, a feature for converting information of the saved screen into a desired data type.

A method of conveniently obtaining corresponding information of a terminal device in an uncontect manner may be conveniently performed by downloading an app performing a corresponding feature to a corresponding terminal device and executing the app.

The device internal information obtaining system 100 may obtain corresponding information of a terminal device in an uncontect manner by performing the following procedure.

The device internal information obtaining system 100 may wirelessly link a corresponding terminal device to an external predetermined device and may download and execute an app.

When executing, the device internal information obtaining system 100 may need to perform an operation in which a customer directly allows to use a corresponding feature based on a security policy of the terminal device. The allowing method may be executed based on a procedure for consent with a screen of the terminal device.

The device internal information obtaining system 100 may link and execute an app performing several features for minimizing contect of a customer to desired internal information (device information of a terminal, in other words, IMEI and the like) in the terminal device and minimizing mechanical linkage with a predetermined device.

The executed app feature may be a feature for capturing a screen of terminal device internal information (IMEI and the like) by automatically moving to a setting menu of the terminal device and storing in a determined storage space (memory).

The device internal information obtaining system 100 may perform a feature for moving to a screen containing terminal device internal information.

Lastly, the device internal information obtaining system 100 may extract desired internal information by applying an OCR analysis feature that may convert a QR code, barcode, and text (a character) included in a predetermined screen (a graphic screen) stored in the determined storage space into data recognizable by the terminal device and an external device.

Through this, the device internal information obtaining system 100 may export obtained internal information to the external device.

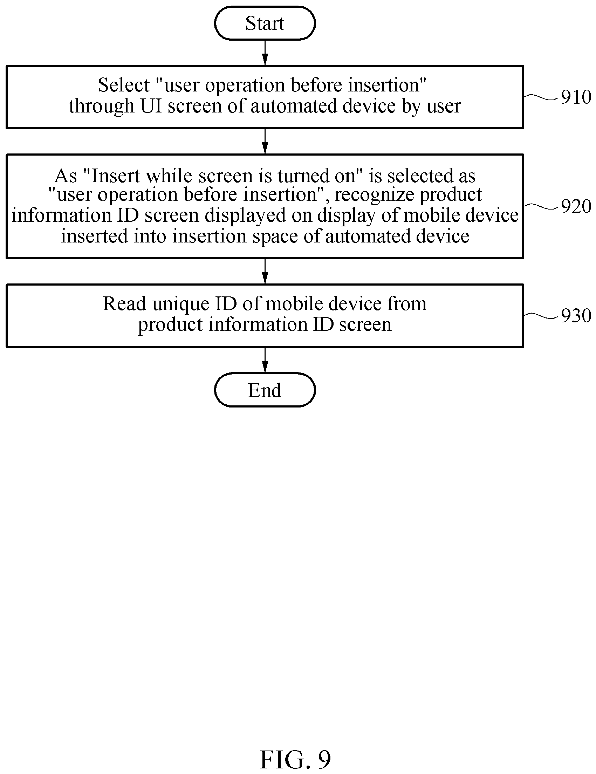

Hereinafter, FIG. 9 illustrates work flow of the device internal information obtaining system 100 according to an example embodiment of the present invention.

FIG. 9 is a flowchart illustrating a method of obtaining internal information of electronic devices according to one example embodiment.

In electronic devices in this example embodiment, a method of obtaining device internal information may be performed by the device internal information obtaining system 100.

Firstly, in operation 910, the device internal information obtaining system 100 may receive a selection related to "a user operation before insertion" from a user through a UI screen of an automated device. Operation 910 may be a process of allowing a user approaching the automated device to select a state of a mobile terminal to be insert into the automated device through the UI screen.

The "user operation before insertion" provided on the UI screen may be "insert while screen is turned on", "insert after installing app", "install app after insertion", and "insert after unlocking password", and among them, the device internal information obtaining system 100 may receive one clicked by the user as "the user operation before insertion" of the user's selection.

"Insert while screen is turned on" may be a user operation to insert a mobile device into the automated device while a product information identifier (ID) screen including a unique ID is displayed on a display.

In the present invention, installation of an app in the mobile device may be selectively performed before or after inserting the mobile device into the automated device.

"Insert after installing app" may be a user operation to insert a mobile device into an automated device in a state in which an app is installed such that the automated device is able to control the mobile device. According to an example embodiment, "Insert after installing app" may be a user operation that directly displays a product information ID screen on a display with a single click by the app and inserts the mobile device in a state in which the product information ID screen is displayed into the automated device.

"Install app after insertion" may be a user operation to automatically install an app on an inserted mobile device as the mobile device is inserted into the automated device. According to an example embodiment, "Install app after insertion" may be a user operation to install an app in a mobile device inserted into an automated device and display a product information ID screen on a display by the app.

"Insert after unlocking password" may be a user operation to insert a mobile device into an automated device while only a locked state is unlocked.

In addition, in operation 920, the device internal information obtaining system 100 may recognize a product information ID screen displayed on a display of a mobile device inserted into an insertion space of the automated device as "Insert while screen is turned on" is selected to be the "user operation before insertion". Operation 920 may be a process of determining a product information ID screen displayed on a display of a mobile device by a user who selects "Insert while screen is turned on".

Under the selection of "Insert while screen is turned on", the user may access the product information ID screen by manually manipulating (manually clicking a menu) the mobile device and causing the display to display the product information ID screen.

The product information ID screen may be a device status screen displaying a unique ID of a mobile device and, for example, may display internal ID information related to a device including international mobile equipment identity (IMEI) information of the mobile device.

In operation 930, the device internal information obtaining system 100 may read the unique ID of the mobile device from the recognized product information ID screen. Operation 930 may be process of reading a combination of characters, numbers, and special characters corresponding to the unique ID by scanning the product information ID screen.

Through this, the device internal information obtaining system 100 may extract a unique ID of a mobile device by analyzing a screen of the mobile device inserted into an automated device.

In another example embodiment, when a user selects "Insert after installing app" as the "user operation before insertion", the device internal information obtaining system 100 may access the product information ID screen by remotely controlling the mobile device through the installed app.

For this, as "Insert after installing app" is selected as the "user operation before insertion", the device internal information obtaining system 100 may execute the installed app in a mobile device that is inserted into an insertion space of an automated device and may display a product information ID screen on a display of the mobile device.

In another example embodiment, when a user selects "Install app after insertion" as the "user operation before insertion", as the device internal information obtaining system 100 recognizes that a mobile device is inserted into an automated device, the device internal information obtaining system 100 may automatically install an app in the inserted mobile device. Through this, the device internal information obtaining system 100 may access the product information ID screen by remotely controlling the mobile device through the installed app.

For this, as "Install app after insertion" is selected as the "user operation before insertion", the device internal information obtaining system 100 may automatically install an app in a mobile device that is inserted into an insertion space of the automated device.

In addition, the device internal information obtaining system 100 may display the product information ID screen on the display of the mobile device by executing the installed app.

In this case, the app may be a dedicated application for implementing remote control of the mobile device.

To install the app, for example, a guide may be provided to a nearby user by the automated device and a user may manually download and install the app in the mobile device based on the guide. For example, for a mobile device inserted into the automated device, the app may be automatically downloaded and installed.

Under the selection of "Insert after installing app" or "Install app after insertion", the product information ID screen may be accessed as the automated device remotely controls and manipulates (automatically clicks a menu) the mobile device through the app and causes a display to display the product information ID screen.

Thereafter, the device internal information obtaining system 100 may recognize the product information ID screen displayed on the display of the mobile device and may read a unique ID of the mobile device from the recognized product information ID screen. That is, the device internal information obtaining system 100 may read a combination of characters, numbers, and special characters corresponding to the unique ID by scanning the product information ID screen displayed through remote control by the app.

Through this, the device internal information obtaining system 100 may control a screen of a mobile device inserted into the automated device, may access a product information ID screen including a unique ID, may analyze the accessed product information ID screen, and may extract the unique ID of the mobile device.

According to an example embodiment, the device internal information obtaining system 100 may store, as an image, the product information ID screen displayed through remote control by the app and may read the unique ID from the stored image.

For this, the device internal information obtaining system 100 may save the product information ID screen displayed on the display of the mobile device and may generate the screen save data. That is, the device internal information obtaining system 100 may provide an environment for analyzing screen save data that is a relatively small-sized image rather than analyzing the product information ID screen described above.

Thereafter, the device internal information obtaining system 100 may extract the unique ID of the mobile device from the screen save data.

Through this, because the device internal information obtaining system 100 may extract an unique ID from the screen save data that saves a screen of the product information ID screen, the device internal information obtaining system 100 may secure internal information of the mobile device using a relatively small volume of processing resources.

In another example embodiment, when a user selects "Insert after unlocking password" as the "user operation before insertion", the device internal information obtaining system 100 may access the product information ID screen by performing touch manipulation on the mobile device.

For this, as "Insert after unlocking password" is selected as the "user operation before insertion", the device internal information obtaining system 100 may correct a pose of a mobile device inserted into an insertion space of the automated device. That is, the device internal information obtaining system 100 may correct the mobile device, which is unlocked and inserted into an insertion space provided in the automated device, to be in a regular pose to enable spatial touch.

In pose correction, the device internal information obtaining system 100 may correct a pose such that the mobile device is able to maintain balance in the insertion space without being tilted.

For this, the device internal information obtaining system 100 may correct the tilt by moving at least one side surface of the mobile device in a direction that is the same as one side surface of the insertion space and may correct a position by matching the center of the mobile device after tilt correction with central coordinates of a coordinate system set to the insertion space.

For example, when the insertion space has a box shape of which the bottom surface is a rectangle, the device internal information obtaining system 100 may perform tilt correction and position correction on the mobile device to be disposed in the same direction and the same angle as the bottom surface of the insertion space.

For position identification and pose correction operations on a mobile device inserted into the insertion space, a camera capturing the mobile device and an image captured by the camera may be used.

The device internal information obtaining system 100 may display the product information ID screen on the display of the mobile device by spatial touch manipulation of the mobile device after the pose correction.

In this case, spatial touch may refer to manipulation that automatically touches a display of a mobile device corrected and disposed in a defined pose in an insertion space while excluding a passive touch by a user.

The device internal information obtaining system 100 may calculate a touch area including at least a mobile device after pose correction and may set a grid-type coordinate system with respect to the touch area based on optical flow by a light source unit that designates a "light source" emitting light and a "reception" where the light enters in the touch area.

Through correction, a touch area may be set to be a rectangle having a size available to include the mobile device therein such that the mobile device is disposed in the same angle and direction as the bottom surface of the insertion space.

The device internal information obtaining system 100 may set a grid-type coordinate system based on optical flow between a "light source" and "reception" disposed at a determined interval in the touch area.

In addition, the device internal information obtaining system 100 may calculate XY coordinates in the coordinate system by recognizing a change in the optical flow and may manipulate a spatial touch on the calculated XY coordinates by a spatial touch hand moving along an x-side driving rail and a y-side driving rail.

That is, the device internal information obtaining system 100 may calculate coordinates in which light emitted from the "light source" flows to different "reception" rather than estimated "reception" or the optical flow temporarily pauses to be XY coordinates in which the optical flow is changed and may move the spatial touch hand to the calculated XY coordinates.

The spatial touch hand may move to the XY coordinates through the x-side driving rail and the y-side driving rail, and the device internal information obtaining system 100 may manipulate the spatial touch by touching the display of the mobile device by the spatial touch hand moved to the XY coordinates.

The XY coordinates may be position values for each step to switch to a sub-menu that is predetermined by each mobile device.

Under the selection of "Insert after unlocking password", the product information ID screen may be accessed by causing the display of the mobile device to display the product information ID screen through a spatial touch by the spatial touch hand.

Thereafter, the device internal information obtaining system 100 may recognize the product information ID screen displayed on the display of the mobile device and may read a unique ID of the mobile device from the recognized product information ID screen. That is, the device internal information obtaining system 100 may read a combination of characters, numbers, and special characters corresponding to the unique ID by scanning the product information ID screen displayed through the spatial touch.

Through this, the device internal information obtaining system 100 may allow the automated device to optimally control the screen of the mobile device by automatically correcting the pose of the mobile device inserted into the automated device.

In addition, the device internal information system 100 may accurately control the screen of the mobile device by selectively using the spatial touch by the spatial touch hand.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape, optical media such as CD-ROM discs, DVDs, and/or Blue-ray discs, magneto-optical media such as optical discs, and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter. The above-described devices may be configured to act as one or more software modules in order to perform the operations of the above-described example embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or pseudo equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A method of obtaining device internal information in electronic devices, the method comprising:
receiving selection of a user related to a "user operation before insertion" through a user interface (UI) screen of an automated device;
in response to selection of "Insert while screen is turned on" as the "user operation before insertion", recognizing a product information identifier (ID) screen displayed on a display of a mobile device inserted into an insertion space of the automated device; and
reading a unique ID of the mobile device from the recognized product information ID screen.

2. The method of claim 1, further comprising:
in response to selection of "Insert after installing app" as the "user operation before insertion", executing an installed app in the mobile device inserted into the insertion space of the automated device and displaying a product information ID screen on the display of the mobile device;
recognizing the product information ID screen displayed on the display; and
reading a unique ID of the mobile device from the recognized product information ID screen.

3. The method of claim 1, further comprising:
in response to selection of "Install app after insertion" as the "user operation before insertion", installing an app on the mobile device inserted into the insertion space of the automated device;
displaying a product information ID screen on the display of the mobile device by executing the installed app;
recognizing the product information ID screen displayed on the display; and
reading a unique ID of the mobile device from the recognized product information ID screen.

4. The method of claim 2 or 3, further comprising:
generating screen save data by saving a screen of the product information ID screen displayed on the display of the mobile device; and
extracting the unique ID of the mobile device from the screen save data.

5. The method of claim 1, further comprising:
in response to selection of "Insert after unlocking password" as the "user operation before insertion", correcting a pose of the mobile device inserted into the insertion space of the automated device;
displaying a product information ID screen on the display of the mobile device by spatial touch manipulation of the mobile device after correcting the pose;
recognizing the product information ID screen displayed on the display; and
reading a unique ID of the mobile device from the recognized product information ID screen.

6. The method of claim 5, wherein the correcting of the pose comprises:
correcting a tilt by moving at least one side surface of the mobile device in a direction that is the same as one side surface of the insertion space; and
correcting a position by matching a center of the mobile device after correcting the tilt to central coordinates of a coordinate system set to the insertion space.

7. The method of claim 6, wherein the displaying of the product information ID screen on the display of the mobile device comprises:
calculating a touch area comprising at least the mobile device after correcting the pose; and
setting a grid-type coordinate system with respect to the touch area based on optical flow by a light source unit that designates a "light source" emitting light and a "reception" where the light enters in the touch area.

8. The method of claim 7, wherein the displaying of the product information ID screen on the display of the mobile device comprises:
calculating XY coordinates in the coordinate system by recognizing a change in the optical flow; and
manipulating spatial touch relative to the calculated XY coordinates by a spatial touch hand moving along an x-side driving rail and a y-side driving rail.

9. A system for obtaining device internal information in electronic devices, the system comprising:
a selection unit configured to receive selection of a user related to a "user operation before insertion" through a user interface (UI) screen of an automated device; and
a recognition unit configured to, in response to selection of "Insert while screen is turned on" as the "user operation before insertion", recognize a product information identifier (ID) screen displayed on a display of a mobile device inserted into an insertion space of the automated device and read a unique ID of the mobile device from the recognized product information ID screen.

10. The system of claim 9, further comprising:
a selection unit configured to, in response to selection of "Insert after installing app" as the "user operation before insertion", execute an installed app in the mobile device inserted into the insertion space of the automated device and display a product information ID screen on the display of the mobile device,
wherein the recognition unit is configured to:
recognize a product information ID screen displayed on the display and read a unique ID of the mobile device from the recognized product information ID screen.

11. The system of claim 9, further comprising:
a processing unit configured to, in response to selection of "Install app after insertion" as the "user operation before insertion", install an app in the mobile device inserted into the insertion space of the automated device and display a product information ID screen on the display of the mobile device by executing the installed app, and
wherein the recognition unit is configured to recognize the product information ID screen displayed on the display and read a unique ID of the mobile device from the recognized product information ID screen.

12. The system of claim 10 or 11, wherein the processing unit is configured to generate screen save data by saving a screen of the product information ID screen displayed on the display of the mobile device, and
the recognition unit is configured to extract the unique ID of the mobile device from the screen save data.

13. The method of claim 9, further comprising:
a correction unit configured to, in response to selection of "Insert after unlocking password" as the "user operation before insertion", correct a pose of the mobile device inserted into the insertion space of the automated device; and
a processing unit configured to display a product information ID screen on the display of the mobile device by spatial touch manipulation of the mobile device after correcting the pose,
wherein the recognition unit is configured to recognize the product information ID screen displayed on the display and read a unique ID of the mobile device from the recognized product information ID screen.

14. The system of claim 13, wherein the correction unit is configured to:
correct a tilt by moving at least one side surface of the mobile device in a direction that is the same as one side surface of the insertion space, and
correct a position by matching a center of the mobile device after correcting the tilt to central coordinates of a coordinate system set to the insertion space.

15. The system of claim 14, wherein the processing unit is configured to:
calculate a touch area comprising at least the mobile device after correcting the pose, and
set a grid-type coordinate system with respect to the touch area based on optical flow by a light source unit that designates a "light source" emitting light and a "reception" where the light enters in the touch area.

16. The system of claim 15, wherein the processing unit is configured to:
calculate XY coordinates in the coordinate system by recognizing a change in the optical flow, and
manipulate spatial touch relative to the calculated XY coordinates by a spatial touch hand moving along an x-side driving rail and a y-side driving rail.

17. A non-transitory computer-readable storage medium storing instructions that, when executed by a processor, cause the processor to perform the method of claim 1.
